Europäisches Patentamt

European Patent Office

Office européen des brevets

(11) Publication number: **0 444 626 A2**

# EUROPEAN PATENT APPLICATION

(21) Application number: 91102877.7

(51) Int. Cl.5: **B41J 11/58**

(22) Date of filing: 27.02.91

(30) Priority: 01.03.90 IT 1952990
22.05.90 IT 2122190 U
05.11.90 IT 2205490 U

(43) Date of publication of application:
04.09.91 Bulletin 91/36

(84) Designated Contracting States:
AT BE CH DE DK ES FR GB GR IT LI LU NL SE

(71) Applicant: **Industria Grafica Meschi S.r.l.**
**Via Pian di Rota, 2**
**I-57100 Livorno(IT)**

(72) Inventor: **Meschi, Luciano**
**Corso Amedeo, 73**
**57100 Livorno(IT)**

(74) Representative: **Michelotti, Giuliano et al**
**c/o SAIC BREVETTI S.r.l. Viale Bianca Maria**
**15**
**I-20122 Milano(IT)**

(54) Automatic service apparatus for fast printers, particularly laser printer.

(57) Automatic service apparatus for fast printers (10) including a store (12) containing reams of papers to be printed, a mechanical arm (16), equipped with plier means (24), movable among a plurality of positions for drawing reams from said store (14), unpacking and aligning sheets of said ream, depositing a ream into a feeding seat of a printer (10) drawing groups of sheets from the output of the printer (10) and tranferring of said groups to an after-treatment station (60) thereof. The plier means can be realized according to different embodiments and provided with a static device for relining up the reams.

Fig.1

The present invention relates to automatic service apparatus for fast printers, as the so-called laser printers, and more particularly, an automatic service apparatus for delivering at the inlet of the laser printer single sheets of papers (in form of reams) and for drawing printed sheets at the output of the printer for the further finishing operations, such as brochure formation.

The fast printers, such as laser printers, are more and more entered the current use especially in the case of paper treatment lines such as service lines of data processing centers and accounting centers, in that the processing speed of the calculating units requires a data fast print on a paper support.

These printers are usually provided with paper in a form of continuous printed form, tipically made up·of a plurality of sheets or forms, connected to form a continous strip and collected in form of accordion refolded packages, or of a continuous paper strip drawn from a feeding coil of the kind so-called pre-worked, that is wherein the paper has been previously equipped with dragging lateral holes, weakening trasversal and longitudinal lines for separation by tearing, and preprinted portions for example with fixed registered indications characteristic of the product which in the last comes out from the line.

In some cases is, however, desirable to provide the printer with single sheets, prearranged in form of reams, in the same manner which is feeded in a conventional photocopying-machine.

However, in the case of fast printers and particularly laser printers, the printer operating speed (in a range of a little less than two sheets per second) makes necessary the permanent presence of an operator which at very short time intervals (considering that the reams on the average contain 500 sheets) charges a new ream when the preceeding one is exansted.

In addition to this problem, which turns into an unacceptable increase in costs if we consider the influence on the costs of labour for any industrial or commercial processing is considered, there is also the problem of the extreme operating sensitivity and delicacy of the laser printer, therefor even the minimum misalignement of the sheets in the reams causes printer jamming and eventually printer stop and a whole line stop therewith.

In the case, for example, of invoicing accounting centers, such as of companies giving services of public utility and, with a two-monthly or monthly expiration, have to issue a greatest number of invoices addressed to the consumers, it si obvious that these difficulties heavily influence the line productivity.

An other problem, of no negligibel importance, is the one about services centers which are in service of several customers of consumers, wherein currently, once finished the work addressed to a first customer, have to pass to the work of a second customer, wherefore up to now it was necessary to stop the line and to substitute the paper along the printer upstream feeding with another bearing, for example, the new heading and a different graphic set-out of the bill.

These problems have till now held back in a most considerable measure the diffusion of the fast printers fed by reams of single sheets, except cases of particular requirements.

A further problem, in common with all the kinds of lines for handling printed paper supports, occurs downstream with respect to the fast printer pricipally after the tearing separation of single sheets or forms from continous strip originally fed on the fast printer. The printed sheets, in fact, most often have to be brochured, such a term includeing operations which range from the simple and trivial stapling to the applications of covers, possibly transparent, equipped with a sticker which is, for example, hot activated.

Also for thlus case like it becomes necessary the intervention of an operator assigned to that operation.

The main object of the present invention is to provide an automatic service apparatus for printers, particularly fast printers, wherein the aforementioned problems and drawbacks are solved in a substantially and industrially advantageous way.

For this purpose the present invention provides an automatic service apparatus for fast printers characterized in that it includes a store containing at least one paper ream to be printed which protrudes, along one of the edges, with respect to the supporting horizontal or subhorizontal surface for a predetermined distance, a mechanical robot arm, equipped with plier means, and movable among a plurality of positions, in a first of which said plier menas being adpted to draw said ream from said store in corrispondence with said protruding edge, in a second position said robot arm being inclined with a cavity defined by said plier means turned to upwards for empacking and alignement operations of sheets along one edge of said cavity of said plier means, in a third position said robot arm being suitable to put said ream into a feeding seat of the fast printer, in a fourth position said robot arm being suitable to draw a prefixed number of printed sheets outgoing from said fast printer to transfer therm to an after-treatment station, said plier means of said robot arm being equipped with the first lateral temporary clamp means of said cavity formed by said plier means, second means to impart a vibratory motion to said walls of said cavity when said robot arm is found in said second position, and third means for the reciprocal approach and moving away of the two parallel and horizontal planes forming said plier means.

Alternatively the service apparatus for printers according to this invention is provided with a plier comprising two parallel plates, a first fixed plate and a second plate movable perpendicularly with respect to said fixed plate, two lateral panels which can rotate around a hinge axis which, in conjunction with said fixed plate, form a box cavity to contain a ream of sheets characterized in that at least one of said panels comprised at least an enveloppe connected with an air intake, said envelope having a plurality of apertures turned to the reams of sheets to convey air jets against one edge of said ream of sheets.

Preferably said envelope is made up of a series of small pipes parallel connected by at least one manifold and the apertures are small holes.

According to a preferred carrying out form, the panel, in its operative position to convey said air jets against the corresponding edge of the reams of sheets, is provided with a striking motion against the lateral edge of the reams and/or parallel plates.

Preferably said striking motion is generated by a stepping motor or a pneumatic system and trasmitted to the panel through a stiff extension which connects the panel to its own hinge.

In addition, said service apparatus is provided with a realignement device consisting of a square support provided to press on two adjacent and reciprocally perpendicualr faces of a ream of sheets without pressing on the corner and leaving the possiblity of examination of the pressed faces.

Particularly, said square support consists in a supporting frame, including two perpendicular branches, bringing two tansparent bearing plates applied theron placed generally directed like said two branches and reciprocally spaced so as not to touch each other along a corner corresponding to the corner of the square frame in order to let a corner of the ream penetrate into the corner of the frame.

More particularly, said two transparent bearing plates are two glass sheets secured by screws to said supporting frame.

Alternatively, said transparent bearing plates are sheets of transparent plastic material Preferably, said transparent palstic material consists of polycarbonate resin.

Further alternatively, said bearing plates are made up of metal plates with substantially smooth bearing surfaces provided with apertures so as to enable an examination of the edges of the ream pressed by the plates.

Preferably, said metal plates are provided with aligend rectangular apertures so close each other to take the apperarance of metal grill having smooth trimmed bearing surfaces.

More preferably, the apertures of the plates are squared.

The specific characteristic and the advantages of the present invention will appear more evident from the following description of one form of preferred embodiment thereof, in an exemplifying but not limitative whag, with reference to the accompanying drawing, wherein:

figure 1 is an overal schematic view of the automatic service apparatus according to the invention;

figures 2 and 3 are perspective and schematic views of the operative end of the robot arm in the step of drawing of a ream of paper;

figure 4 is a perspective view of the same operative end of the robot arm in the vibration step to line up the sheets of a ream;

figure 5 and 6 are similar views to those of figure 2 and 3 of the feeding step of the fast printer with the ream of paper;

figure 7 is a similar schematic view to that of figure 1 of the output section of the fast printer and of the accessory operation;

figure 8 and 9 are longitudinal and transversal sectional views, respectively of the plier means, according with a first variation of the embodiment;

figure 10 is a prospetic view of the plier means in a second variation of the embodiment;

figure 11 is a plan view of the plier of figure 10;

figure 12 is a front view of the forward portion of the plier of figure 10;

figure 13 is a schematic view of the plier of figure 10 partially in section according to the line 13-13;

figure 14 is a partially shortened perspective view of an embodiment of a static device for realignment of reams applicable to the present invention; and

figure 15 is a perspective view of the device depicted in figure 14.

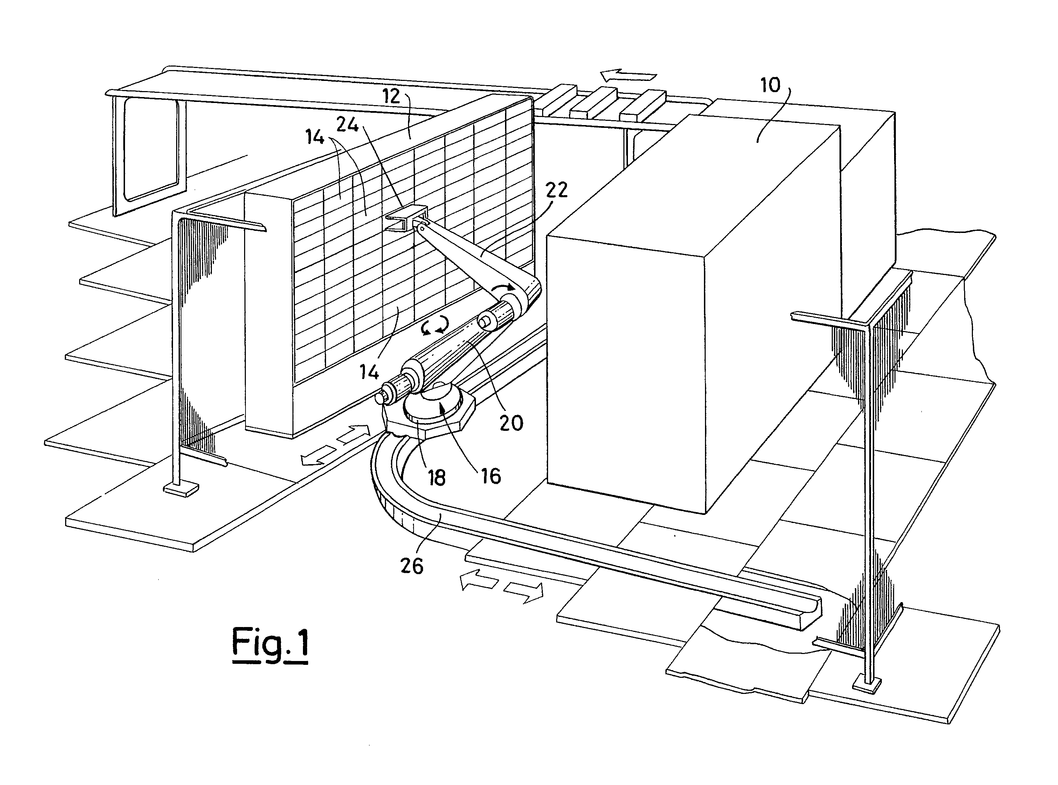

With reference now first of all to figure 1, with reference number 10 is generically indicated and shown a fast printer, like a laser printer. In front of the supply side (not shown) is arranged a store 12 of reams of paper which in this form of embodiment includes a number of boxes 14 suitable to secure an autonomy of operation of a certain number of hours. Preferably the store 12 is mounted on wheels, wherefor, when it is finished, it can be replaced with another similar store previously charged with reams of papers.

Between the store 12 and the printer 10 is arranged a robot arm group, generically and as whole indicated with the number 16 and including a base 18, a first arm 20 and a second arm 22, the last one bringing plier means 24. The base 18 is motorized and mounted on a rail 26 whereon the same base can be shifted to serve the printer 10.

Obviously the rail 26 may be prearranged so as the group 16 can serve subsequently more than one fast printer 10, obviously depending on the operative speed of each printer 10.

The first arm 20 is rotatingly mounted on the base 18, so as it can be traversed, while the second 22 pivots, at a first end thereof, on the end of the first arm 20, with possibility of the second arm 22 to be rotated around the axis of the first arm 20 and therfore to rise or lower the plier means towards a position and therefore a preselected box 14.

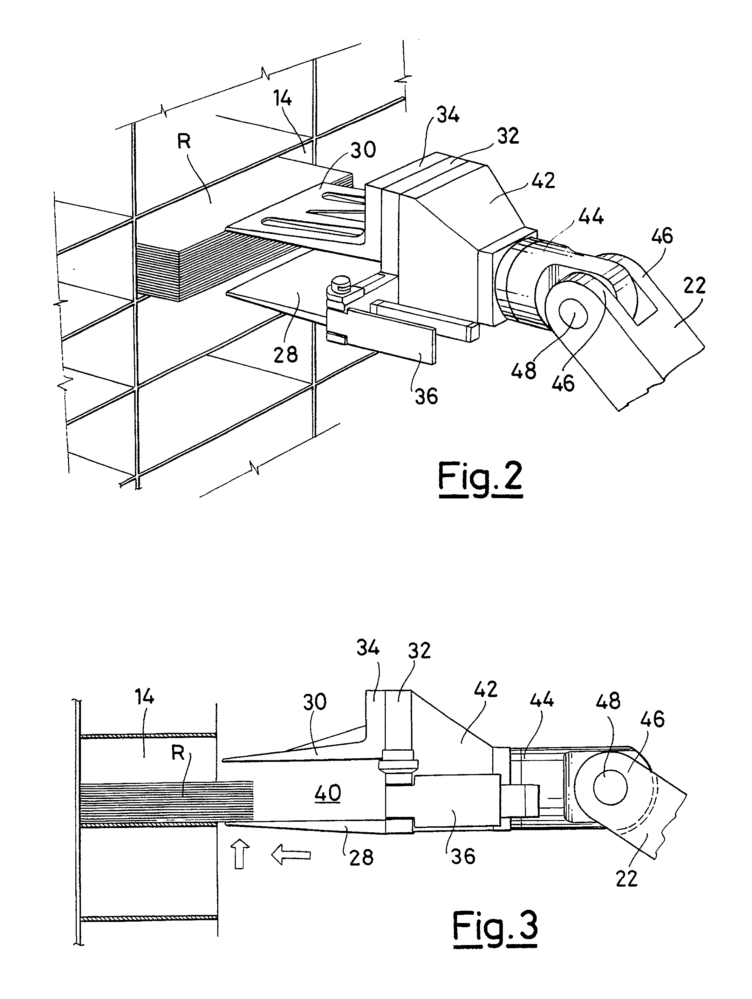

First plier means 24 (figures 2-6) include substantially two plate jaws, 28 and 30 respectively, mounted on a supporting bracket 32; the jaw 28 is fixed and anchored to the base of the jaw 32, while the jaw 30 is shaped as L with the not operative side 34 anchored to the jaw 32 so as to be able to slide along the same jaw towards reciprocal approach and moving away.

On both sides of the bracket 32 are rotatingly engaged two lateral panels 36 and 38, movable between an inactive or rest position (shown in figure 2) wherein they are back folded along the sides of the plier means and an operative or forward rotated position so as to fit along the lower side with the adjacent lateral edge of the lower jaw 28 forming in this manner, in conjuction with the higher jaw 30, a box cavity 40, for the purpose which will be subsequently described. On turn, the bracket 32 is mounted on a box 42 wherein are housed operating mechanisms subsequently described. The box 42, on turn, is mounted by means of a pivot 44 on the end of the second arm 22 ending with two ears 46, between which the eyelet pivot 44 is fixed by a pivot 48 so as the box 42 can rotate by driving around the axis of the pivot 48.

Inside the box 42 are housed the following operating mechanisms:

a) first motor means which drive the vertical displacement of the jaw 30 towards vertical approach and moving away with respect to the fixed lower jaw 28;

b) second lower means for displacement of both panels 36 and 38 between the two positions, previously indicated;

c) third motor means to give a vibration motion, of desired frequency and alplitude, to the assembly including the jaws 28,30 and the bracket 32;

d) fourth motor means for controlled rotation of the box 42 round the axis of the pivot 48;

e) fifth motor means for controlled rotation of the arm 22 with respect to the arm 20.

All these motor means as well as the mechanical arrangement and the specific mechanical features are not described in greater detail, being a matter of executive details within the capacity of the people skilled in the art, once clearly identified the operations they have to solve.

For this purpose now will be described the operation of the automatic apparatus according to the present invention.

When a ream R of sheets of paper is to be supplied to the laser printer 10, a control unit selects a box 14 of the store 12 wherefrom the aforesaid ream has to be drawn.

Accordingly, the group 18 is shifted in a position along the rail 26 as far as the box 14 is found in the range of action of the group itself. Of course such a position is included in the drive predispositions of the apparatus according to the invention.

In this position of the group 16, the arm 20 is traversed until is brought with the end connected to the arm 22 in vertical alignement with the desired box 14, afterwards, by rotating the arm itself, the end plier means of the arm 22 are brought to the height of the regarded box 14.

As already mentioned and clearly visible in figure 2, the ream contained in the box 14 protrudes with a portion of its edge longer than the box itself in order to offer a space of grasp for the jaws 28 and 30 wich in wide apart condition approach the box mouth itself so as the fixed lower jaw is below the lower sheet of the ream of paper indicated by the reference R.

Under this condition the higher jaw 30 is operated by shifting towards the lower jaw as far as to graps firmly the ream R which, if the width of protruding edge of the box 14 is sufficient, will be grasped without folding towards down, in virtue of the matter that the ream itself is grasped along its edge of greater lenght.

At this moment both lateral panels 36 and 38 are operated to rotate 180 degrees moving to their already mentioned operative position, wherein in conjuction with the lower jaw 28 form a box cavity, whose sizes are slightly greater than the ones of the ream of paper.

With the ream R contained at this step in the aforesaid box cavity, the box, or head, is rotated towards up, so as the lower jaw 28 results inclined towards up starting from its line of junction with the bracket 32 and inclined to one side, that is to one of the parallel panels 36 or 38.

In this condition the ream R results leant, even if in a not perfectly ordered and aligned manner, against the bottom of the box cavity and against one of the lateral panels.

If desired, in this condition a separated mechanism of unpacking, for example formed by a rotating shaft with flexible blades, may engage the free edge of the ream securing that the sheets do not remain too adherent preventing the subsequent single drawing by means of the printer dragging mechanism.

In the aforesaid condition of the head 42 is applied the already vibrating movement which from the walls of the box cavity propagate to the ream R which, for well known effect and owing to the gravity, causes the settling of the ream with the edges of the sheets perfectly aligned each other and defined to the 90 degrees edges by the lateral panels and the bottom of the box cavity.

Once this operative step is completed, the higher jaw 30 is tightened against the lower jaw 28 grasping firmly the ream R which is therefore transferred to the supply inlet of the printer in the opening of which penetrates the assembly formed by both jaws and the ream.

At the beginning of the withdrawin movement of the jaws 28 and 30 from such opening is activated a piston and cylinder device whose stem 50 is integral with a sheet-pressing plate 52 which extend for the whole height and length of the side of the ream defined by the bottom of the aforesaid box cavity, wherefor the ream R is not withdrawn because of the outgoing of the jaws 28 and 30 from the opening of the printer supply 10.

As already mentioned in the preamble of the description of this invention, the robot arm group may be activaed even in the step of manipulation of the printed sheets outgoing from the printer 10.

In fact one of the features of the lines whereto the present invention is directed is the one which carries out works with a variable number of printed sheets, which seldom correspond with the number of sheets contained in the ream charged in the opening of the printer feeding.

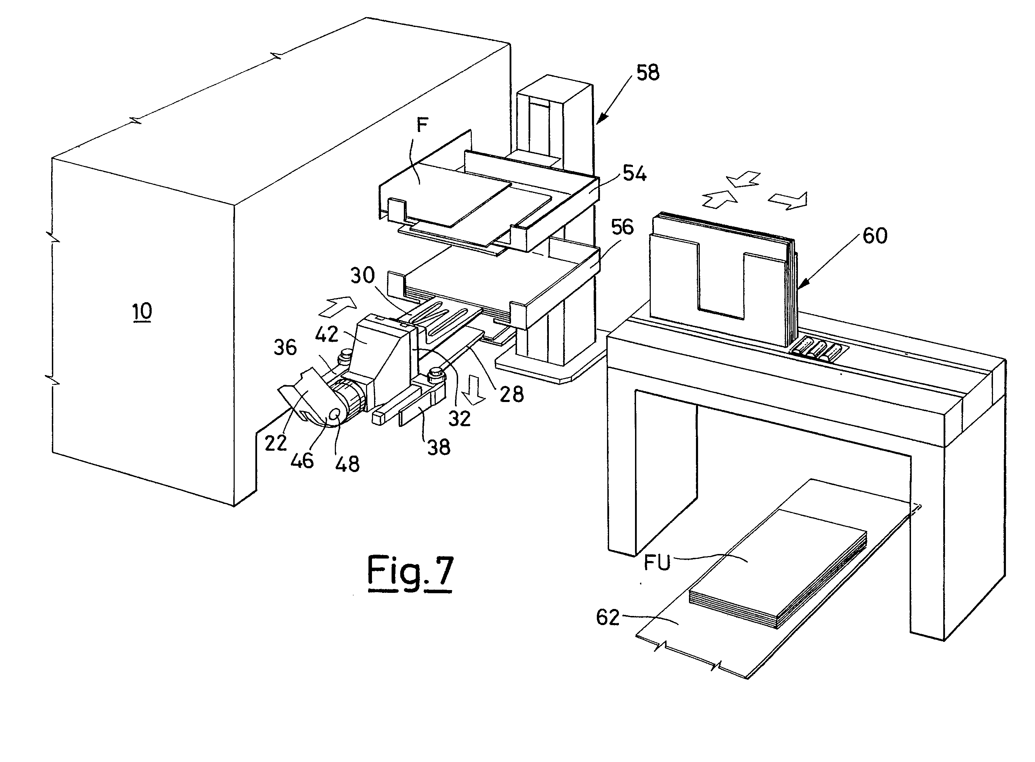

It is apparent that, once ended the group of printed sheets, these must be removed away and treated as an only unit (job separation). For this purpose, in addition to equip the printer with a copy of receiving drawers 54 and 56 (fig. 7), mounted on a structure 58 which allows the vertical transation, so as one of them is always in a suitable position to receive printed sheets 10 outgoing from the printer 10, the concerned drawers are shaped so as to allow the head 42 to bring both jaws 28 and 30 in free engagement with the packet of printer sheets present in the drawers itself.

Once grasped the packet, the head 42 repeats the rotation movements towards up and towards one side, so as in the box cavity, reformed owing to the operation of the panels 36 and 38, the packet itself is perfectly aligned in correspondence with a larger side of it again owing to the vibration motion applied by the box cavity.

Once this operation is completed, the group 16 provides to transfer the packet, firmly hold between the jaws 28 and 30, to a finishing device, such ad a brochure maker 60 of well known type, or a stapling device or other.

From this last device the finished brochure FU is moved away from the line for example by means of a conveyor belt 62.

The versatility and reliability the automatic apparatus according to the present invenzion will be apparent from the following description admiting many variations.

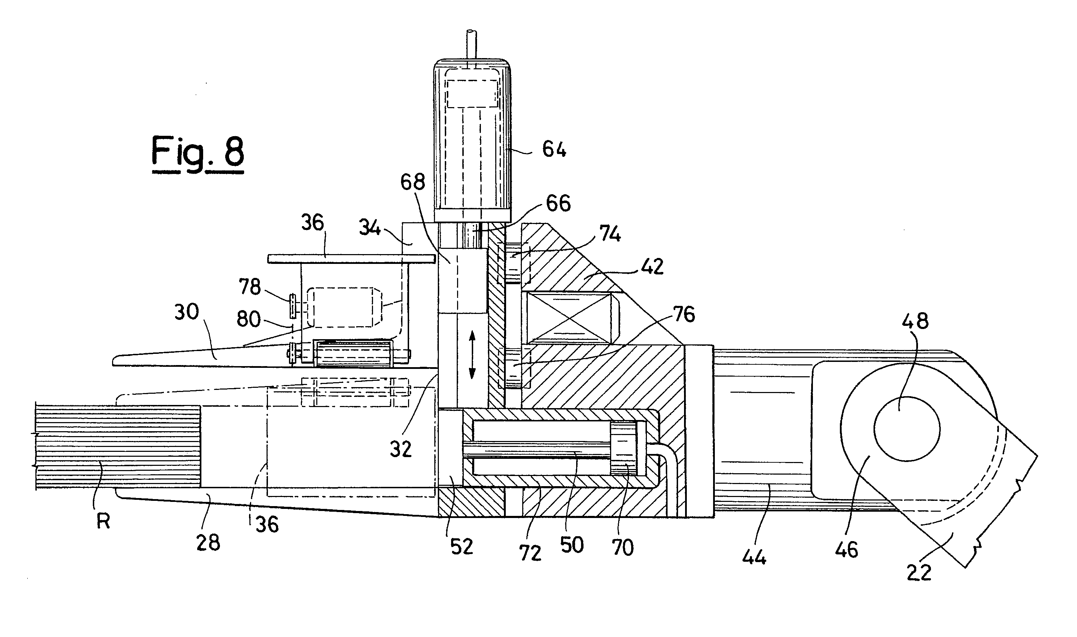

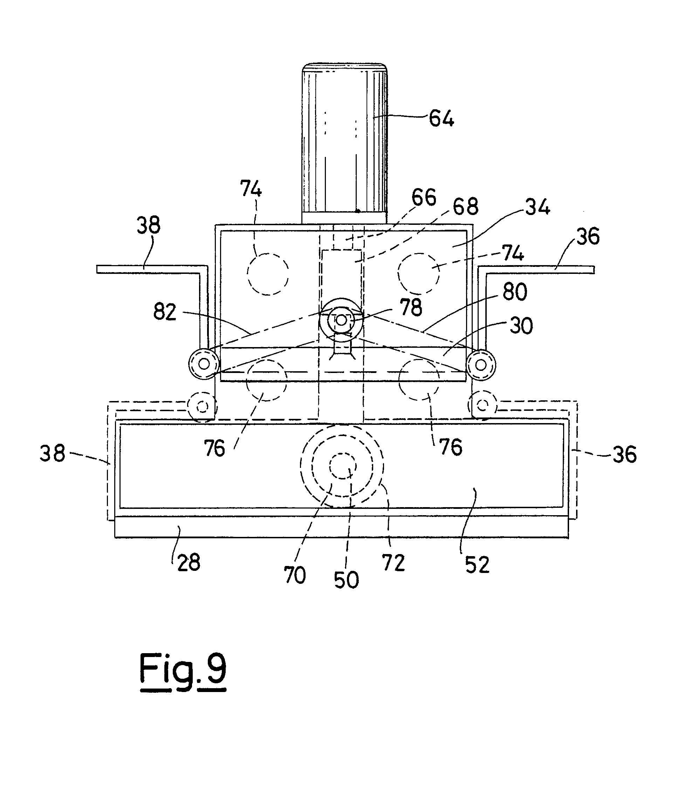

As an embodiment of said plier means reference will be made to the embodiments shown in figures 8 to 13, wherein, where it is possible, the same references of the preceeding figures 1-7 have been used.

In this case the vertical shift of the higher jaw 30 is driven by a pneumatic double-acting cylinder mechanism 64, whose piston, through a stem 66, drives the vertical translation of a slide 68 integral with the side 34 of the higher jaw 30.

For the operative displacement of the sheet-presser 52, the stem 50 is operated by a piston 70 associated to a cylinder 72.

In order to give a vibrating movemet to the jaws 28 and 30 are provided two rubber pads or other elastic material 74 and 76 wherefor a movement applied to the head 42 is trasmitted as a vibration to both jaws 28 and 30.

Finally, as far as concerns of lateral panels 36 and 38, that in this case are hinged to the fixed lower jaw 28, an electric motor 78 is provided which through small drive belts 80 and 82 in discordance motion each other causes a 180 degrees rotation of the panels themselves by means of a mechanism integral to the rotation pivots.

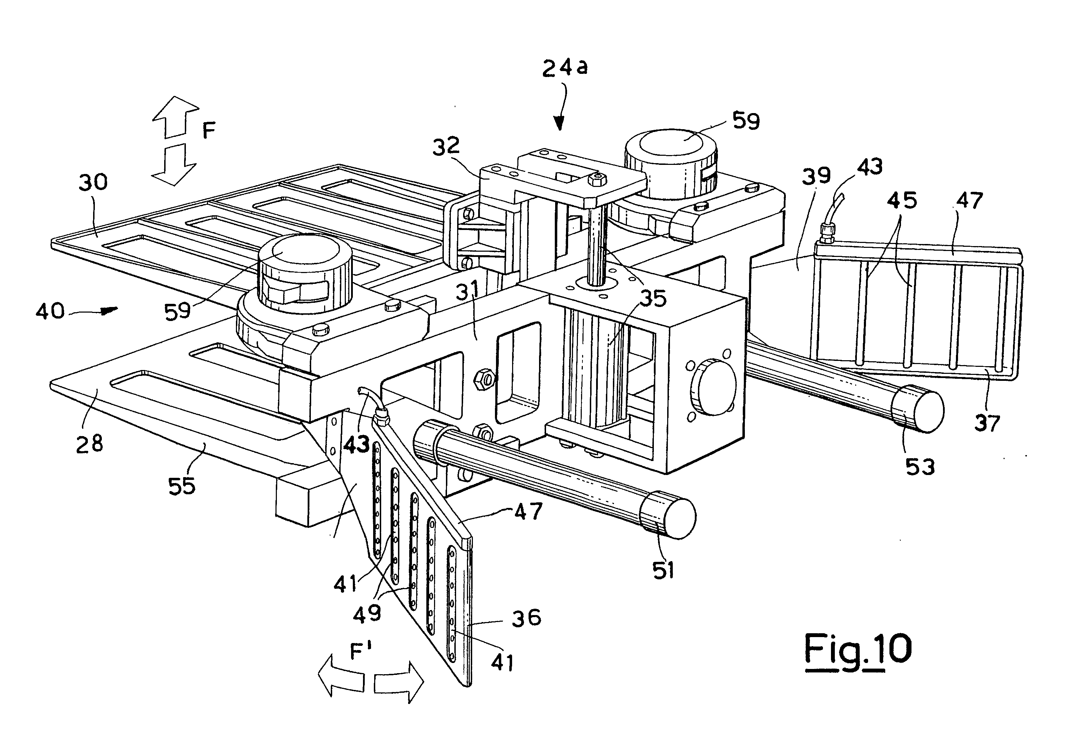

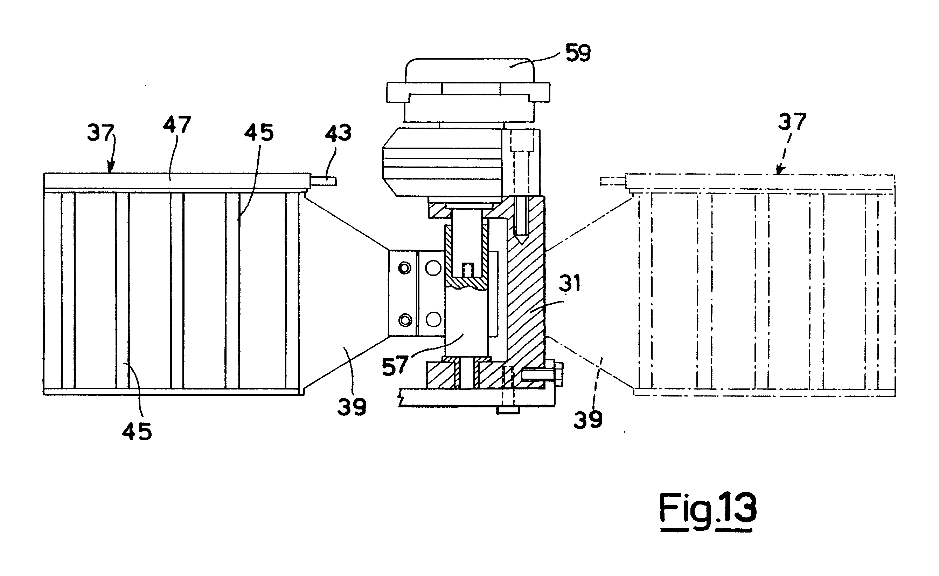

Now with reference to figures 10 and 13 a further plier generally indicated with 24a includes substantially two plates or jaws 28, 30 mounted on a bracket 31, the jaw 28 being fixed and anchored to the base of the bracket, being the jaw 30 fastened to a movable support 32 which runs along the bracket in approaching and moving away directions (F), driven by a cylinder-piston system 35.

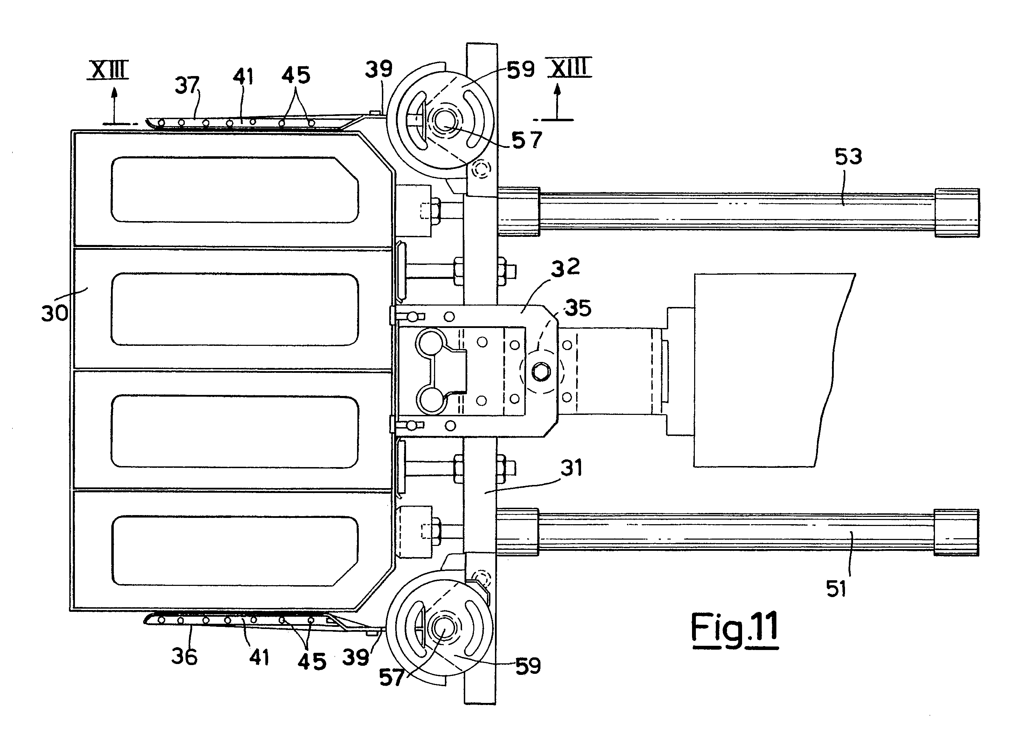

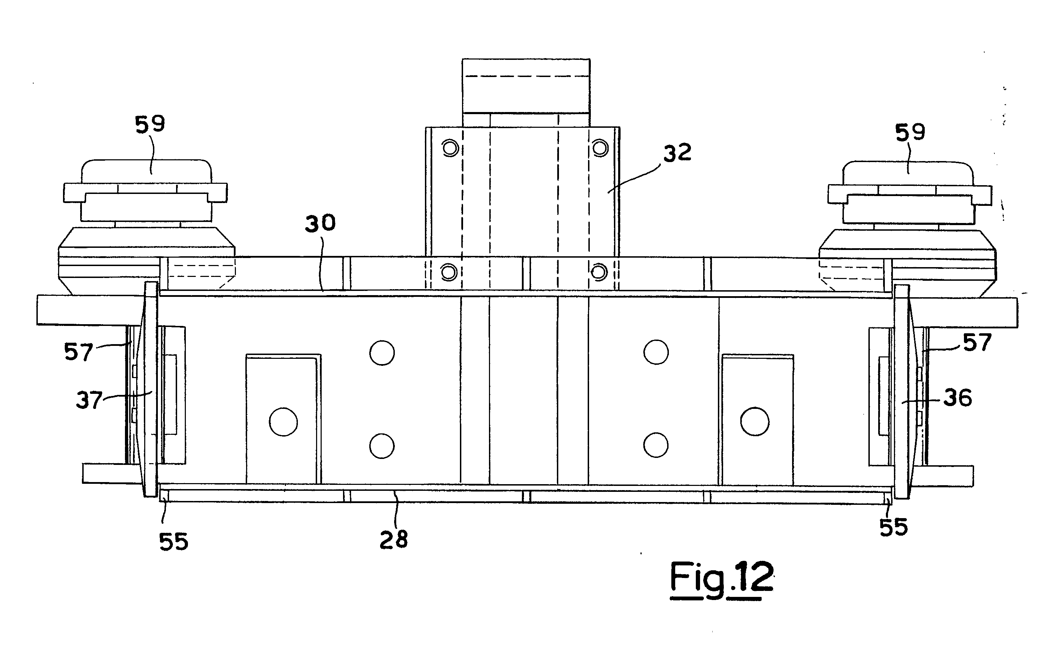

On both sides of the bracket are rotatingly pivotted (F') two lateral panels 36, 37 movable between an inactive or rest position shown in figure 10, wherein they are back folded with respect to the sides of the plates 28, 30 and an operative position of forward rotated (see figures 11 and 12) so as to fit together along the lower side with the lateral adjacent edge of the lower plate a28, forming in this way a box cavity 40 to contain a ream of sheets (not shown).

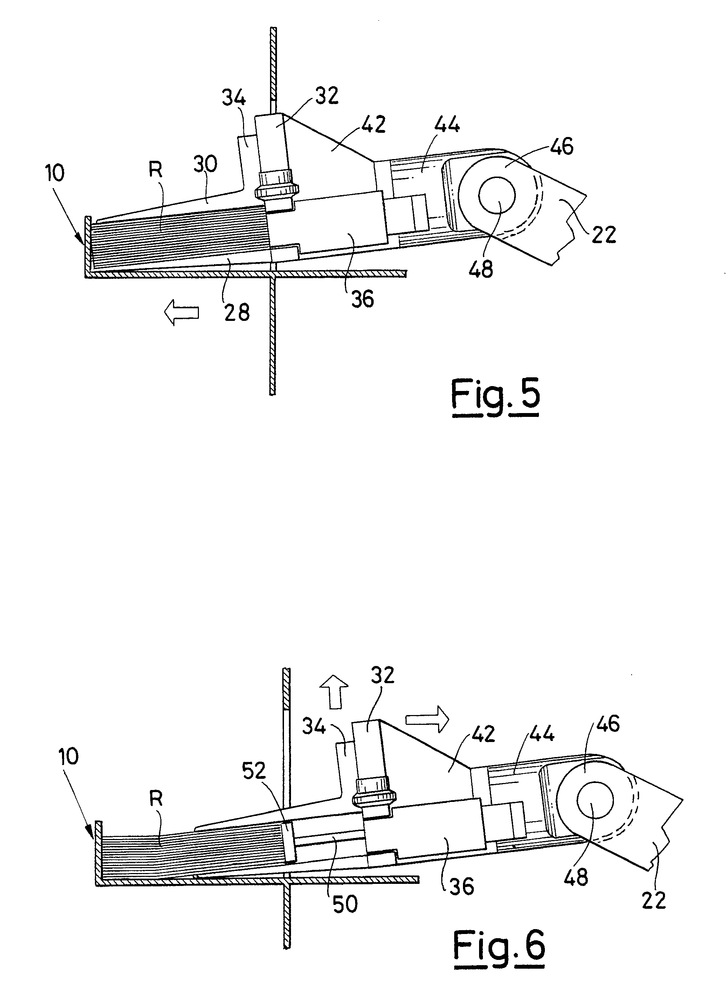

With 51, 53 are indicated two cylinders with pistons to push the ream of sheets towards a desired position as already describen in the preceeding figure 6.

The lateral panels include an envelope 41 connected to an air intake 43 controlled by an electrovalve (not shown).

In the depicted example the envelope 41 is made up of a plurality of small parallel pipes 45 connected to a manifold 47; the small pipes present a plurality of small holes or micro-holes 49, which, when the panels are in operative position (figure 11 and 12), that is in close contact with the lateral edge 55 of the fixed plate 28, are directed to the box cavity 40 wherein is sheltered a ream of sheets addressed to be charged into the laser printer (not shown).

The lateral panels 36, 37 present a stiff extension 39 having flat form which extend from the panel portion nearer to the bracket 31 as far as the pivot or hinge axis 57.

The pivot 57 in connected to a stepping motor 59 which has the task to bring the panels into the desired position (inactive or operative) and, when said panels are in operative position, to give them (through the pivot 75 and the planar extension 39) a beating movement against the ream of sheets sheltered in the box cavity 40 and/or against the edges of both jaws.

The stepping motor could be replaced with a mechanical system of eccentrics and cam shaft or a pneumatic system with a double-acting cylinder-piston.

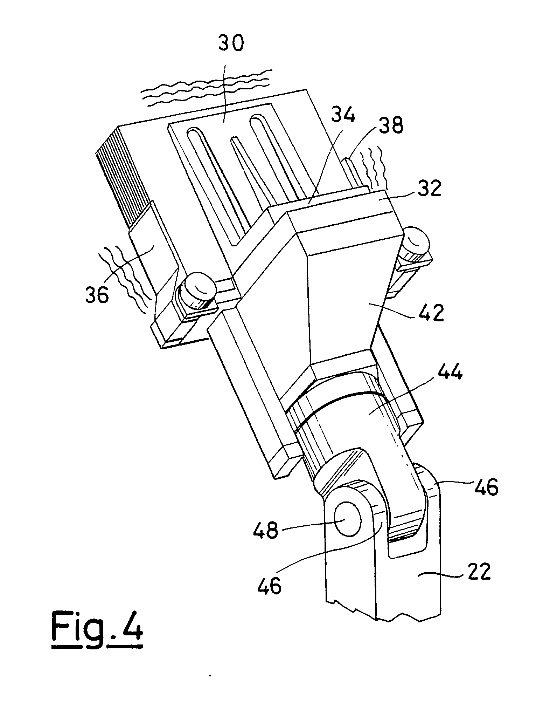

When the plier 24a draws a ream of sheets from a store by means of the jaws or plates 28, 30 as substantially previously indicated with regard to the figures 2 and 4 sheltering them in the cavity 40, the lateral panels 36 and 37 are brought into the operative position of figures 11 and 12 (in case it slightly moves away the movable jaw 30 of that short displacement which is enough to reduces a little its pressure on the ream.

At the same time the stepping motor 59 sets the later panels 36, 37 an impacting movement against the lateral edges of the ream and/or both jaws or plates.

In this way the sheets which make up the reams receive the desired unpacking with respective edges perfectly aligned each other, ready to undergo further treatments.

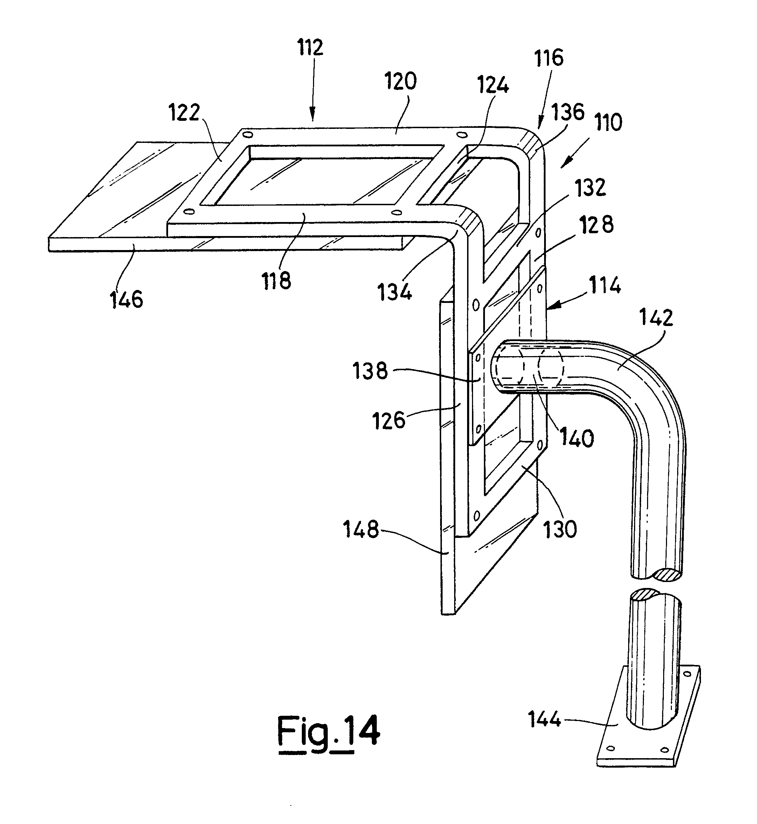

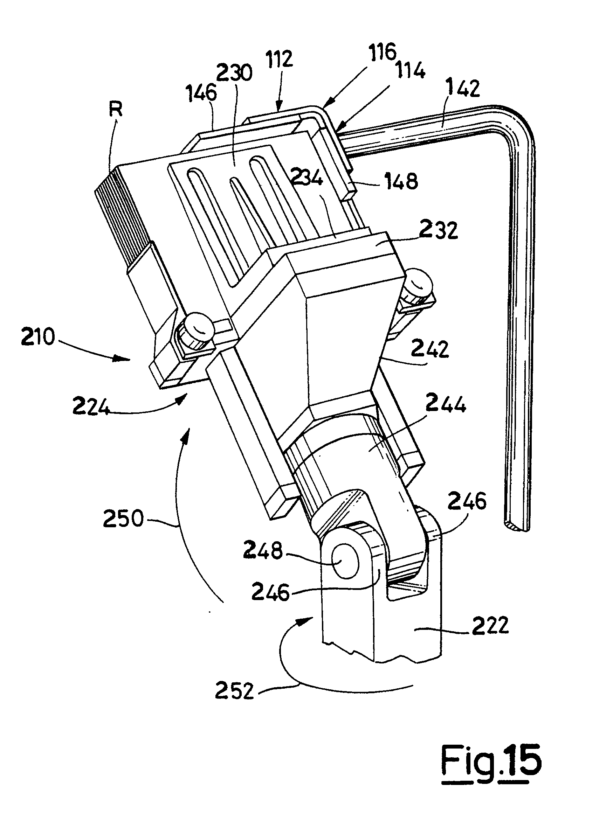

Considering now figures 14 and 15 it is seen that the auxiliary realignment static device consists in a small square frame 110 including two reciprocally perpendicular branches connected to an angle member 116.

The branch 112 comprises two longitudinal rods 118 and 120 connected by two crosspieces 122 and 124, the branch 114 comprises two longitudinal rods 126 and 128 connected by two crosspieces 130 and 132 and the angle member 116 comprises two crosspieces 124 and 132 respectively. On the branch 114 of the small frame 110 is fastened a plate 138 provided with anchoring column 140 engaged in an arm 142 which may have any shape, like the elbowshape illustrated in figure 14, ending with a fastening flange 144.

On the branch 112 of the small frame is fastened a plate 146 of transparent material, which may be glass or some plastic material (higly transparent plastic material, like polycarbonate, because of its features of lowest brittlenes together with stoutness and relatively high scratching strenght). Similarly to the branch 114 is fastened the plate 148, also of transparent material of the same kind of the one of the plate 146. The reason by which it is preferred to use two transparent plates 146 and 148 on the two branches 112 and 114 of small frame will result apparent from the explanation of the operation of the device herewith given.

A way to apply the present invention can be undestood from figure 15, wherein it is seen applied to a movable plier of transport, unpacking, and alignement of reams of paper like the one of figure 4.

In this figure 15 for convenience have been adopted the same numeric symbols of figure 4 to which has been added before the digit 2.

As can be here seen, a robot 210 includes an arm 222 ending with plier means 224 capable to grasp a ream of paper R, including two jaws, between which is visible the L shaped jaw 230, movable through a side 234, slidably along a supporting bracket 232. The bracket 232, in turn, is supported by a box 242 which by means of an eyelet pin is engaged between the eyes 246 of the arm 222 crossed by a turning pivot 248, allowing turning movement of the plier means 224 according to the arrow 250, while an other turning movement is carried out from the robot arm 222 according to the arrow 252.

The operation of the device is the following: as visible in figures 14 and 15, on the small square frame 110 are mounted two transparent plates 146 and 148 addressed to press against a ream of paper, as the ream R of figure 15, with an outer corner of the ream inserted into the angle member 116 of the small frame 110. Both transparent plates 146 and 148 allow to perceive the bearing of the ream R against the realignement device and estimate the realignement of possible misalingned single sheets. Moreover, the space left free from both plates 146 and 148 in the angle member 116 allows to make it enter, as already said, an outer corner of the ream and estimate through the window limited by the crosspieces 124 and 132 and by the square rods 134 and 136 the correct alignement of the corner of the ream housed therein.

In the case in which the ream R is contained in plier means 224 supported at the end of a robot arm 222, it is enough that the movable jaw 230 does not hold too firmly the ream R and that first moves the plier means 224 according to the movement indicated by the arrows 250 and afterwards moves the robot arm 222 according to the movement indicated by the arrow 252 in order to have the ream R pressed against the realignement device, reaching a correct levelling or realignementof all its single sheets.

The invention has been described in relation to its forms of preferred embodiment being clear that conceptually and mechanically equivalent modifications and variations are possible and expectable without going out from the scope thereof.

For example, the transparent plates 146 and 148 could be replaced with two metallic plates provided with squared or rectangular holes so large as to have than resembling to grills, having just the shrewdness to give a smooth finishing to the surfaces addressed to meet the ream of paper to reach the same result to make enough visible the edges of the ream and operate a correct realignement thereof, as well as to held the corner of the ream occurring at the device angle away from the angle member 146 and, expecially, from square rods 134 and 136.

## Claims

1. Automatic service apparatus for fast printer (10) characterized in that it includes a store (12) containing at least one ream (R) of paper to be printed which along one of the edge protrudes with respect to an horizontal and subhorizontal supporting surface of a predetermined distance, a mechanical robot arm (16) equipped with plier means (24) and movable among a plurality of positions, in a first of which said plier means (24) are adapted to draw said ream (R) from said store (12) in corrispondence of said protruding edge, in a second position said robot arm (16) beign inclined with a cavity (40) defined by said plier means (24) directed to up for anti-adhesive unpacking operations and alignement of sheets along one edge of said cavity of said plier means (24), in a third position said robot arm (16) being capable to deposit said ream (R) in a feeding seat of the fast printer (10), in a fourth position said robot arm (16) being capable to draw a prefixed number of printed sheets outgoing from said fast printer (10) and transfer them to an after-treatment station (60), said plier means (24) of said robot arm (16) being provided with first means (36,38) of temporary lateral clamp of said cavity (40) formed by said plier means (24), with second means (74,76) to give a vibration motion to the walls of said cavity when said robot arm (16) is situated in said second position, and with third means (64) for reciprocal approaching and moving away of two parallel and horizontal planes (28,30) forming said plier means (24).

2. Automatic apparatus, as in claim 1, characterized in that said store (12) is in the form of a set of pigeon-holes comprising as many boxes (14) as may by sufficient to allow an autonomy of some hours of the served fast printer (10).

3. Automatic apparatus, as in claim 1, characterized in that said mechanic robot arm (16) is formed by a base (18), a first arm (20) articulated on said base (18) and movable for rotation around a first vertical axis passing through the base (18), a second arm (22) articulated on said first arm (20) and movable around a second axis perpendicular with respect to the vertical axis of said base (18) and said plier means (24) mounted articulated on an outer end of said second arm (22), said mechanic robot arm (16) being operative by moving two of its arms (20 and 22) to bring said plier means (24) in front of at least said store (12) and said printer (10).

4. Automatic apparatus, as in claim 3, characterized in that said mechanic robot arm (16) has the base (18) provided with a motor for displacement and mounted on a rail (26) to move said robot arm (16) around said printer (10).

5. Automatic apparatus, as in claim 3, characterized in that said plier means (24) are articulated on said second arm (22) by means of an articulation formed by an eyelet pin (44) afterwards protruding from said plier means (24), inserted between two eyes (46) and integral at the end of the second arm (22) and by a cylindrical pin (48) crossing said two eyes (46) and the eyelet pin (44).

6. Automatic apparatus, as in claim 5, in which said plier means (24) are formed by two plate supporting jaws, as parallel and horizontal planes (28,30), characterized in that a first jaw (28) is fixed to a supporting bracket (32), a second jaw (30) is slidable with respect to said supporting bracket (32) which, in turn, is mounted on an intermediate box (42) containing manouever mechanisms for said plier means (24) and connected to an eyelet pin (44) of articulation of plier means (24) with respect to said second arm (22).

7. Automatic apparatus, as defined in claim 6, characterized in that said means (64) for aproaching and moving away of the jaws (28,30) consist in a double-acting cylinder whose piston, through a stem (66), operate a slide (68) fixed at one side (34) of the second jaw (30).

8. Automatic apparatus as defined in claims 5 to 7, characterized in that in the bottom of the cavity (40) defined by the jaws (28,30) and by the supporting bracket (32) is provided a feed-out device of the ream (R) formed by a sheet-pressing (52), extending for the whole height of the side of the ream, provided with a stem (50) operated by a piston (70) slidable within a cylinder (72).

9. Automatic apparatus as in claim 6, characterized in that the means (74,76) for helping to provide vibrating movement to the walls of the cavity (40) consist of two resilient pads, between the supportign bracket (32) and the intermediate box (42), transforming shifting movements of the bracket (32) into vibrating movements.

10. Automatic apparatus, as in claim 6, characaterized in that the temporary lateral clamp means (36,38) of the cavity (40) are formed by two panels hinged to the supporting bracket (32) and rotatable about 180 to move from an open position to a closed position.

11. Apparatus as in claim 6, characterized in taht the temporary lateral clamp means (36,38) of the caity (40) are formed by two lateral panels hinged to the first fixed jaw (28) and rotatably about 180 by means of a motor (78) and belt drives (80,82) to move from open position to closed position.

12. In a printer service apparatus as in preceeding claims, a plier including two parallel plates, a first fixed plate (28) and a second movable plate (30) movable in direction perpendicular to said fixed plate (28), two lateral panels (36,37) rotatable around a hinge axis (57) to contain a ream of sheets (R) characterized in that at least one of said panels (36,37) includes at least an envelope (41) connected to an air intake (43), said envelope (41) having a plurality of apertures directed to the ream of sheets to convey air jets against an edge of said ream of sheets.

13. A plier, as in claim 12, characterized in that said envelope (41) is made up of a series of small pipes (45) parallel connected by at least one manifold (47).

14. A plier, as in claim 12, characterized in that the apertures are small holes (49).

15. A plier, as in claim 12, characterized in that said panels (36,37) including an envelope (41) are two, each of them arranged at each side of both plates.

16. A plier, as in claim 12, characterized in that said air intake (43) is controlled by an electric valve.

17. A plier, as in claim 12, characterized in that the panel (36 or 37) in its operative position to convey said air jets against the corrispondent edge of the ream of sheets (R) is provided with a striking movement against the lateral edge and/or lateral plates (28,30).

18. A plier, as in claim 17, characterized in that said striking movement is produced by a stepping motor (59) and transmitted to the panel (36 or 37) by means of a rigid extension which connects the panel (36,37) with its hinge axis (57).

19. A plier, as in claims 17, characterized in that said striking motion is produced by a pneumatic double-acting piston-cylinder system and transmitted to the panel (36 or 37) by means of a rigid extension (39) connecting the panel (36,37) with its hinge axis (57).

20. In a service printer apparatus, as in claims 1 to 11, a realignement device of reams (R) of paper consisting in a square support provided to press on two adjacent and reciprocally perpendicular faces of a ream (R) without pressing on its corner and allowing possibility of examination of the pressed faces.

21. Realignement device, as in claim 20, characterized in that said square support consists in a square supporting frame (110), comprising two perpendicular branches (112,114), bearing applied two transparent support plates (146,148) generally arranged directed like said two branches (112,114) and reciprocally spaced so as not to touch each other along a correspondent corner at the angle of the square frame (110) in order to allow one corner of the ream (R) to penetrate within the frame angle (110).

22. Realignement device, as in claim 21, characterized in that said two transparent supporting plates (146,148) are two glass sheets secured by means of screws to said supporting frame (110).

23. Realignement device, as in claim 21, characterized in that said transparent supporting plates (146,148) are two sheets of transparent plastic materials.

24. Realignement device, as in claim 23, characterized in that said transparent plastic material consists in polycarbonate resin.

25. Realignement device, as in claim 20, characterized in that said support plates (146,148) are made up of metalic plates with substantially smooth support surfaces provided with apertures so as to allow an examinations of the edges of the ream (R) pressed from the same plates.

26. Realignement device, as in claim 25, characterized in that said metalic plates are provided of rectangular aligned apertures and so each other closed to assume the appearance of metalic grills having finished smooth bearing surfaces.

27. Realignement device, as defined in claim 26, charcaterized in that the apertures of the plates are squared.

Fig.1

## Fig.2

## Fig.3

11

# Fig.4

Fig.5

Fig.6

Fig.7

EP 0 444 626 A2

Fig. 8

EP 0 444 626 A2

## Fig.9

Fig.10

EP 0 444 626 A2

Fig.11

EP 0 444 626 A2

Fig.12

EP 0 444 626 A2

Fig.13

EP 0 444 626 A2

Fig.14

Fig.15